# EUROPÄISCHE PATENTSCHRIFT

(11) **EP 2 318 176 B1**
(45) Veröffentlichungstag und Bekanntmachung des Hinweises auf die Patenterteilung: **20.03.2013**
(21) Anmeldenummer: 08775146.7
(22) Anmeldetag: 16.07.2008
(51) Int. Cl.: B23Q 1/62, B23Q 1/38

(54) **WERKZEUGMASCHINE**
MACHINE-TOOL
MACHINE-OUTIL

(43) Veröffentlichungstag der Anmeldung: 11.05.2011
(73) Patentinhaber: Index-Werke GmbH & Co. KG Hahn & Tessky, 73730 Esslingen (DE)
(72) Erfinder: GROSSMANN, Walter, 73666 Baltmannsweiler (DE)
(74) Vertreter: Hoeger, Stellrecht & Partner Patentanwälte
(86) Internationale Anmeldenummer: PCT/EP2008/059326
(87) Internationale Veröffentlichungsnummer: WO 2010/006648

(56) Entgegenhaltungen:
- EP-A- 1 249 579
- EP-A- 1 759 809
- WO-A-01/81040
- DE-A1- 2 255 627
- DE-A1- 10 013 277
- DE-A1- 10 247 354
- US-A- 3 640 590
- US-B1- 6 220 281

## Beschreibung

Die Erfindung betrifft eine Werkzeugmaschine nach dem Oberbegriff des Anspruchs 1.

Derartige Werkzeugmaschinen sind aus dem Stand der Technik, beispielsweise aus der DE 100 19 788 A1 oder der DE 10 2005 041 496 A1 bekannt.

Bei diesen Werkzeugmaschinen besteht das Problem, dass die Positionierung von die Gleitstützflächen tragenden Elementen relativ zum zweiten Schlittenelement aufwändig ist und dauerhaft keine exakte Führung der Schlittenelemente relativ zueinander gewährleistet.

Der Erfindung liegt daher die Aufgabe zugrunde, die Führung des zweiten Schlittenelements mittels der Gleitstützflächen relativ zum ersten Schlittenelement zu verbessern.

Diese Aufgabe wird bei einer Werkzeugmaschine der eingangs beschriebenen Art erfindungsgemäß durch die Merkmale des Anspruchs 1 gelöst.

Der Vorteil der erfindungsgemäßen Lösung ist darin zu sehen, dass einerseits durch die formschlüssige Aufnahme der Gleitblöcke eine sichere und langzeitstabile Fixierung derselben an den Stützflügeln gewährleistet ist und dass andererseits durch die durch den Basiskörper und die Stützflügel erzeugte Vorspannung der Gleitstützflächen gegenüber den Gleitführungsflächen eine dauerhafte und zuverlässige sowie insbesondere präzise Führung des zweiten Schlittenelements am ersten Schlittenelement gewährleistet ist.

Hinsichtlich der Ausbildung der formschlüssigen Aufnahmen für die Gleitblöcke wurden bislang keine spezifischen Angaben gemacht. So sieht eine vorteilhafte Lösung vor, dass die Gleitblöcke durch die Aufnahmen in den Stützflügeln auf ihren den Gleitstützflächen abgewandten Abstützseiten in Richtung der Gleitführungsflächen mit einer Kraft beaufschlagt sind.

Besonders günstig ist es, wenn in den Aufnahmen für die Gleitblöcke jeder Gleitblock mit der Abstützseite an einer Stützfläche und mit einer Anlageseite an einer Anlagefläche anliegt.

Vorzugsweise ist dabei bei der erfindungsgemäßen Lösung die Stützfläche so ausgebildet, dass sie sich über mindestens die Hälfte der Ausdehnung der Abstützseite, noch besser mindestens 60% der Ausdehnung der Abstützseite, erstreckt.

Hinsichtlich der Erzeugung der Vorspannung wurden bislang keine näheren Angaben gemacht.

So wäre es beispielsweise denkbar, die Stützflügel relativ zueinander elastisch bewegbar an dem Basiskörper vorzusehen. Beispielsweise könnte dies durch eine begrenzt elastische Lagerung der Stützflügel am Basiskörper erfolgen.

Besonders vorteilhaft ist es jedoch bei der erfindungsgemäßen Lösung, wenn die Vorspannung durch eine Deformation im Bereich der Stützflügel erzeugbar ist. Dies hat insbesondere den Vorteil, dass damit eine sehr stabile Anordnung der Stützflügel am Basiskörper möglich ist, die außerdem wiederum die Präzision der Führung verbessert.

Dabei könnten immer noch im Bereich der Stützflügel elastische Elemente vorgesehen sein.

Noch besser ist es jedoch, wenn die Vorspannung durch die Materialelastizität der Stützflügel bedingt ist, das heißt das Material der Stützflügel eine ausreichende Elastizität aufweist, um die Vorspannung zu erzeugen.

Hinsichtlich der konstruktiven Lösung ist es besonders vorteilhaft, wenn die Stützflügel und der Basiskörper ein einstückiges Teil bilden, so dass dadurch die maximale Führungsstabilität gepaart mit der notwendigen Elastizität zur Erzeugung der Vorspannung erreichbar ist.

Hinsichtlich der Erzeugung der Vorspannung wurden bislang keine näheren Angaben gemacht.

So wäre es beispielsweise denkbar, zur Erzeugung der Vorspannung die Gleitblöcke relativ zu den Stützflügeln mit einer Verstelleinrichtung verstellbar anzuordnen, so dass durch die Verstelleinrichtung die Vorspannung erzeugbar ist.

Um jedoch Ungenauigkeiten durch eine derartige Verstelleinrichtung und insbesondere eine spätere Verstellung der einmal gewählten Vorspannung zu vermeiden, ist vorzugsweise vorgesehen, dass die Gleitblöcke mit einem definierten Übermaß quer zur Kreuzschlittenbewegungsfläche hergestellt sind.

Das heißt, dass die Gleitblöcke so dimensioniert sind, dass bei deren Einsetzen in die Aufnahmen in den Stützflügeln und bei Anordnung der Führungselemente zwischen den Gleitblöcken zwangsläufig die Vorspannung vorliegt.

In einem derartigen Fall erfolgt der Zusammenbau der Stützflügel und der Gleitblöcke mit den dazwischenliegenden Führungselementen derart, dass die Stützflügel durch eine Spannvorrichtung gespreizt werden, dann die Gleitblöcke mit Übermaß und die zwischen diesen liegenden Führungselemente eingesetzt werden und dann wiederum die Spannvorrichtung abgenommen wird, so dass durch die Materialdeformation in den Stützflügeln eine definierte Vorspannung erzeugt ist, die dann ständig auf die Gleitblöcke wirkt.

Vorzugsweise können dabei alle Gleitblöcke mit Übermaß hergestellt sein.

Es ist aber insbesondere denkbar, die Gleitblöcke, die auf einer Seite des mindestens einen Führungselements anliegen, in die vorgesehenen Aufnahmen in den entsprechenden Stützflügeln einzusetzen, das mindestens eine Führungselement aufzulegen, dann das Maß zwischen der nicht durch Gleitblöcke beaufschlagten Gleitführungsfläche und den noch freien Aufnahmen für Gleitblöcke zu ermitteln und dann die in diese noch freien Aufnahmen einzusetzenden Gleitblöcke mit Übermaß herzustellen und nach Spreizen der Stützflügel einzusetzen, wobei durch das Übermaß die gewünschte Vorspannkraft festlegbar ist.

Hinsichtlich der Anordnung der Gleitführungsflächen wurden bislang keine näheren Angaben gemacht. Prinzipiell wäre es möglich, dass sich die Gleitführungsflächen auf einer Seite des Basiskörpers erstrecken.

Hinsichtlich einer verbesserten Führungsstabilität ist es jedoch vorteilhaft, wenn sich die Gleitführungsflächen auf zwei Seiten des Basiskörpers erstrecken. Dabei könnten die Gleitführungsflächen sich beispielsweise V-förmig erstrecken und der Basiskörper innerhalb des V-Ausschnitts angeordnet sein.

Besonders vorteilhaft ist es jedoch, wenn sich die Gleitführungsflächen auf gegenüberliegenden Seiten des Basiskörpers erstrecken, so dass der Basiskörper auch auf gegenüberliegenden Seiten geführt und abgestützt ist.

Dabei kann sich der Basiskörper in einem zwischen den Gleitführungsflächen liegenden Bewegungsraum in Richtung der beiden Kreuzschlittenbewegungsrichtungen bewegen und ist seitlich des Bewegungsraums, in diesem Fall beispielsweise beiderseits des Bewegungsraums an den Gleitführungsflächen abgestützt geführt.

Um dabei das erste Schlittenelement und das zweite Schlittenelement relativ zueinander einfach montieren zu können, ist dabei vorzugsweise vorgesehen, dass der Bewegungsraum zwischen den Gleitführungsflächen zumindest auf einer Seite frei zugänglich ist, so dass der Basiskörper des zweiten Schlittenelements mit den Stützflügeln in den Bewegungsraum zwischen den Gleitführungsflächen hineinbewegbar ist, um das Kreuzschlittensystem zu montieren.

Eine vorteilhafte Ausbildung eines erfindungsgemäßen ersten Schlittenelements sieht vor, dass dieses ungefähr U-förmig ausgebildet ist und mit den beiden seitlichen Schenkeln die Gleitführungsflächen bildet.

Die Montage des Kreuzschlittensystems lässt sich aber auch noch weiter dadurch vereinfachen, dass das erste Schlittenelement zwei Führungselemente umfasst, die separat relativ zum zweiten Schlittenelement montierbar sind.

Beispielsweise sind dabei die zwei Führungselemente unabhängig voneinander am Maschinengestell angeordnet und nur durch das Maschinengestell in ihrer definierten Ausrichtung zueinander gehalten.

Um dabei die Montage des Kreuzschlittensystems zu erleichtern, ist vorzugsweise vorgesehen, dass mindestens eines der zwei Führungselemente lösbar am Maschinengestell montierbar ist.

Noch vorteilhafter ist es, wenn beide Führungselemente lösbar am Maschinengestell montierbar sind.

Um eine präzise Montage des mindestens einen Führungselements am Maschinengestell zu gewährleisten, ist vorzugsweise vorgesehen, dass das Maschinengestell Aufnahmen für die Führungselemente aufweist, in denen die Führungselemente vorzugsweise formschlüssig fixierbar sind.

Hinsichtlich der Zahl der verwendeten Gleitblöcke wurden bislang keine näheren Angaben gemacht.

So sieht eine vorteilhafte Lösung vor, dass das zweite Schlittenelement mit mindestens drei Gleitblöcken an jeder Gleitführungsfläche geführt ist.

Vorzugsweise ist ferner vorgesehen, dass die Gleitblöcke paarweise an dem zweiten Schlittenelement angeordnet sind und dass jeder Gleitblock eines Paares auf jeweils einer der einander gegenüberliegenden Gleitführungsflächen mit seiner Gleitstützfläche aufliegt.

Hinsichtlich der Ausbildung der Gleitblöcke selbst wurden im Zusammenhang mit den bislang beschriebenen Ausführungsbeispielen keine näheren Angaben gemacht.

So sieht eine vorteilhafte Lösung vor, dass die Gleitblöcke einen in ihrer Gleitstützfläche vertieft eingelassenen Verteilkanal für Schmiermittel aufweisen.

Vorzugsweise sind dabei die Gleitblöcke an eine zentrale Schmiermittelversorgung der Werkzeugmaschinen angeschlossen, welche das Schmiermittel in die Verteilkanäle einspeist.

Ferner ist vorzugsweise vorgesehen, dass jedem Gleitblock eine Druckspeichereinheit für Schmiermittel zugeordnet ist.

Eine derartige Druckspeichereinheit schafft die Möglichkeit, Druckschwankungen in der zentralen Schmiermittelversorgung auszugleichen, um den Verteilkanal möglichst gleichmäßig und fortwährend mit Schmiermittel zu versorgen.

Vorzugsweise ist dabei der Gleitblock so ausgestaltet, dass in dem Gleitblock der Verteilkanal über einen Zufuhrkanal mit einem Versorgungskanal und der Druckspeichereinheit verbunden ist.

Eine besonders vorteilhafte Lösung sieht ferner vor, dass die Gleitblöcke des zweiten Schlittenelements identisch ausgebildet sind.

Schließlich ist zur Verbesserung der Gleitfähigkeit der Gleitstützfläche der Gleitblöcke die Gleitstützfläche mit einer amorphen Kohlenstoffschicht versehen, welche deren Gleiteigenschaften verbessert.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Frontansicht einer erfindungsgemäßen Werkzeugmaschine;
- Fig. 2: eine perspektivische Darstellung eines Kreuzschlittensystems mit einem Werkzeugrevolver;
- Fig. 3: eine Ansicht des Kreuzschlittensystems in Richtung des Pfeils A in Fig. 2 ;
- Fig. 4: eine Ansicht des Kreuzschlittensystems in Richtung des Pfeils B in Fig. 2;
- Fig. 5: eine perspektivische Darstellung des Kreuzschlittensystems von der Rückseite;
- Fig. 6: eine perspektivische Darstellung eines Gleitblocks;
- Fig. 7: eine Frontansicht des Gleitblocks;
- Fig. 8: einen Schnitt längs Linie 8-8 durch den Gleitblock in Fig. 7 und
- Fig. 9: einen Schnitt längs Linie 9-9 durch den Gleitblock in Fig. 7.

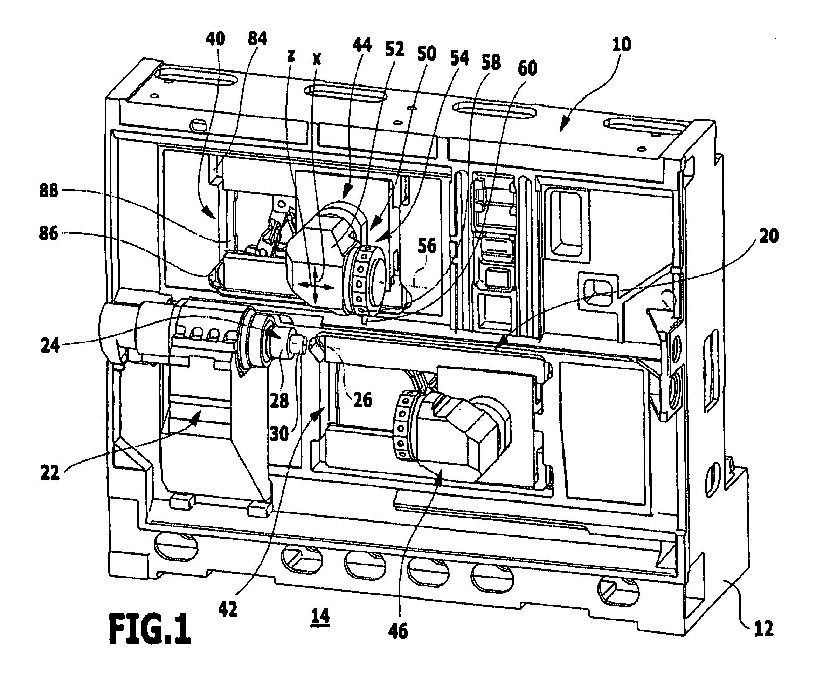

Ein Ausführungsbeispiel einer erfindungsgemäßen Werkzeugmaschine, dargestellt in Fig. 1, umfasst ein Maschinengestell 10, welches mit einem Fuß 12 auf einer Grundfläche 14 steht, und einen als Ganzes mit 20 bezeichneten Maschinenbettkörper, an welchem beispielsweise ein als Ganzes mit 22 bezeichneter Spindelträger angeordnet ist, in welchem eine Werkstückspindel 24 um eine Spindelachse 26 drehbar gelagert aufgenommen ist, wobei die Werkstückspindel 24 eine Werkstückaufnahme 28 aufweist, welche zur Aufnahme eines Werkstücks 30 dient, um dieses zu bearbeiten.

Der Maschinenbettkörper 20 umfasst außerdem zwei Kreuzschlittenaufnahmen 40 bzw. 42, in welchen Kreuzschlittensysteme 44 bzw. 46 angeordnet sind, die vorzugsweise identisch ausgebildet sind, so dass sich die nachfolgende Beschreibung auf die detaillierte Beschreibung des Kreuzschlittensystems 44 in der Kreuzschlittenaufnahme 40 beschränkt.

Jedes der Kreuzschlittensysteme 44, 46 trägt einen Werkzeugrevolver 50, welcher ein Revolvergehäuse 52 aufweist, an welchem ein Revolverkopf 54 um eine Revolverachse 56, beispielsweise eine Revolverschaltachse, drehbar gelagert ist. Der Revolverkopf 54 trägt dabei eine Vielzahl von Werkzeugaufnahmen 58, in welche Werkzeuge 60 zur Bearbeitung des Werkstücks 30 einsetzbar sind und abwechselnd am Werkstück 30 durch Drehen des Revolverkopfes 54 um die Revolverachse 56 in Einsatz gebracht werden können.

Durch das Kreuzschlittensystem 44 lässt sich der Werkzeugrevolver 50 einerseits in Richtung einer X-Achse quer zur Spindelachse 26 bewegen und andererseits in Richtung einer Z-Achse parallel zur Spindelachse 26, wobei die X-Achse und die Z-Achse eine Kreuzschlittenbewegungsebene aufspannen, parallel zu welcher der gesamte Werkzeugrevolver 50 zweidimensional bewegbar ist, und wobei die Bewegung des Werkzeugrevolvers 50 durch Maximalwege in Richtung der X-Achse und in Richtung der Z-Achse begrenzt ist.

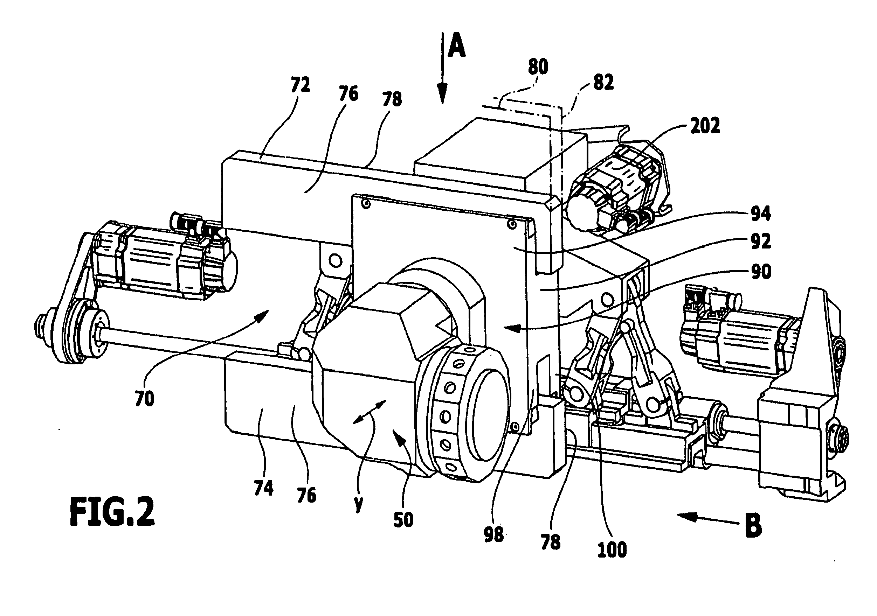

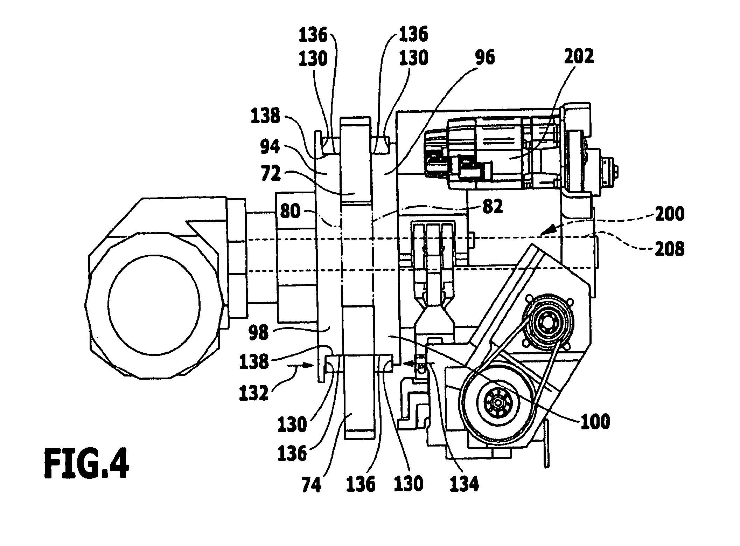

Die erfindungsgemäßen Kreuzschlittensysteme 44 weisen nun, wie in Fig. 2, 3 und 4 dargestellt, jeweils ein erstes Schlittenelement 70 auf, welches bei dem dargestellten Ausführungsbeispiel zwei plattenähnliche Führungselemente 72 und 74 umfasst, die sich vorzugsweise ungefähr parallel zueinander erstrecken und sich jeweils parallel zur Kreuzschlittenbewegungsfläche erstreckende arbeitsraumseitige Gleitführungsflächen 76 und arbeitsraumabgewandte Gleitführungsflächen 78 aufweisen, wobei die arbeitsraumseitigen Gleitführungsflächen 76 und die arbeitsraumabgewandten Gleitführungsflächen 78 ihrerseits jeweils in einer Ebene 80 bzw. 82 liegen, und insbesondere die Führungselemente 72 und 74 vorzugsweise identisch ausgebildet sind und in dieser Ausrichtung auch vom Maschinenbettkörper 20 gehalten sind.

Hierzu weist der Maschinenbettkörper 20, wie in Fig. 1 dargestellt, im Bereich der Kreuzschlittenaufnahmen 40, 42 Vertiefungen 84, 86 für die jeweiligen Führungselemente 72 bzw. 74 auf, in welche die Führungselemente 72, 74 einsetzbar sind, wobei die Vertiefungen 84 und 86 eine randseitige Flanschfläche 88 aufweisen, auf welcher die Führungselemente 72, 74 vorzugsweise in mit ihren nicht einander zugewandten Bereichen aufliegen und mit welchen die Führungselemente 72, 74 beispielsweise verschraubt sind, so dass durch den Maschinenbettkörper 20 die beiden Führungselemente 72, 74 in ihrer relativen Ausrichtung zueinander, insbesondere so, dass die Gleitführungsflächen 76 und 78 der Führungselemente 72, 74 jeweils in gemeinsamen Ebenen 80 bzw. 82 liegen, angeordnet sind.

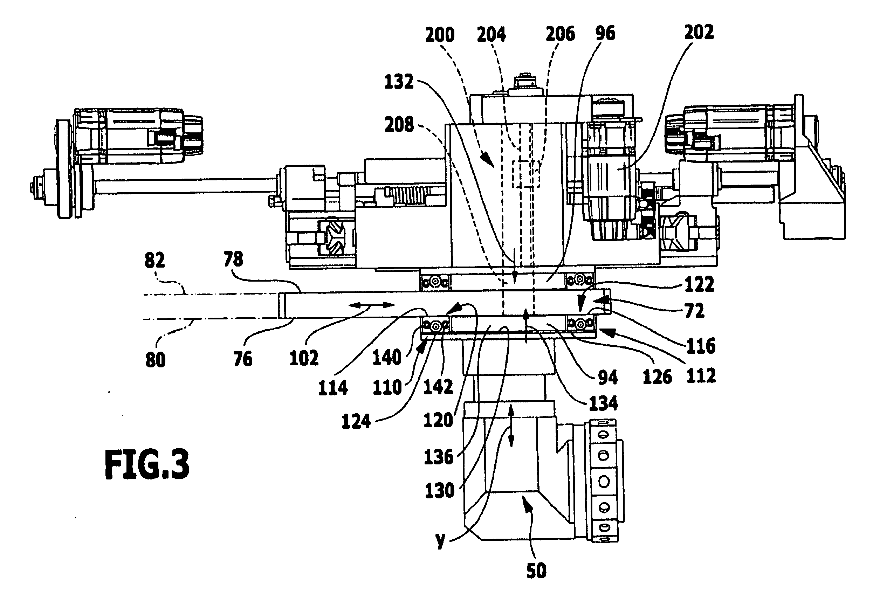

An dem durch die Führungselemente 72 und 74 gebildeten ersten Schlittenelement 70 ist ein zweites Schlittenelement 90 geführt, welches, wie insbesondere in Fig. 2 und 3 dargestellt, einen Basiskörper 92 aufweist, der direkt oder indirekt den Werkzeugrevolver 50 trägt.

Der Basiskörper 92 ist ferner noch mit die Gleitführungsflächen 76 und 78 des Führungselements 72 übergreifenden und das Führungselement 72 zwischen sich aufnehmenden Stützflügeln 94 und 96 versehen, sowie auch mit die Gleitführungsflächen 76 und 78 des Führungselements 74 übergreifenden und das Führungselement 74 zwischen sich aufnehmenden Stützflügeln 98, 100, wobei jeder der Stützflügel 94, 96 bzw. 98, 100 einstückig an dem Basiskörper 92 angeformt ist und in seinen, dem Basiskörper 92 abgewandten Außenbereichen in einer Längsrichtung 102 der Führungselemente 72, 74 im Abstand voneinander angeordnete Gleitblöcke 110, 112 trägt, die mit Gleitstützflächen 114, 116 auf den Gleitführungsflächen 76 bzw. 78 aufliegen und auf diesen Gleitführungsflächen 76 bzw. 78 gleitend in Richtung der X-Achse und der Z-Achse bewegbar sind.

Die Stützflügel 94, 96, 98, 100 sind zur Aufnahme der Gleitblöcke 110 und 112 mit Gleitblockaufnahmen 120 versehen, welche die Gleitblöcke 110, 112 formschlüssig aufnehmen, und zwar so, dass die Gleitblöcke 110, 112 mit den Gleitstützflächen 114, 116 gegenüberliegenden Abstützseiten 124, 126 an einer für die Abstützseiten 124, 126 vorgesehenen Stützfläche 130 der Gleitblockaufnahme 120 des jeweiligen Stützflügels 94, 96, 98, 100 anliegen können, wobei die Stützfläche 130 in den jeweiligen Stützflügel 94, 96, 98, 100 eine maßlich präzise bearbeitete Fläche ist, die insbesondere parallel zur jeweils gegenüberliegenden Stützfläche 130 des gegenüberliegenden Stützflügels verläuft.

Damit sind die Gleitblöcke 110, 112 im jeweiligen Stützflügel 94, 96, 98, 100 durch die Stützflächen 130 einerseits stabil und andererseits mit maximaler Steifigkeit in Stützkraftrichtungen 132 und 134 angeordnet, in welchen von den Stützflügeln 94, 96, 98, 100 ausgeübte Stützkräfte auf die Gleitblöcke 110, 112 und die Gleitblöcke 110, 112 wieder auf die Führungselemente 72, 74 wirken.

Ferner weist die jeweils für zwei Gleitblöcke 110, 112 vorgesehene Gleitführungsaufnahme 120 noch eine Anlagefläche 136 auf, an welcher die Gleitblöcke 110, 112 mit einer quer zur Abstützseite 124, 126 verlaufenden Anlageseite 138 anlegbar sind, um die Gleitblöcke 110, 112 in einer quer zu den Stützkraftrichtungen 132, 134 verlaufenden Richtung sicher zu fixieren.

Vorzugsweise sind dabei die Gleitblöcke 110, 112 mittels Schrauben 140, 142, die die Anlageseite 138 und die Anlagefläche 136 durchsetzen, an den Stützflügeln 94, 96, 98, 100 fixiert.

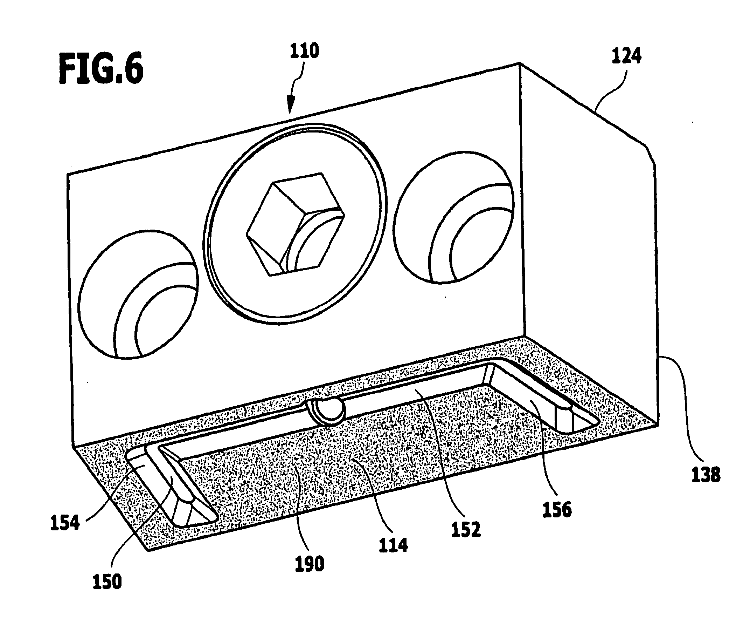

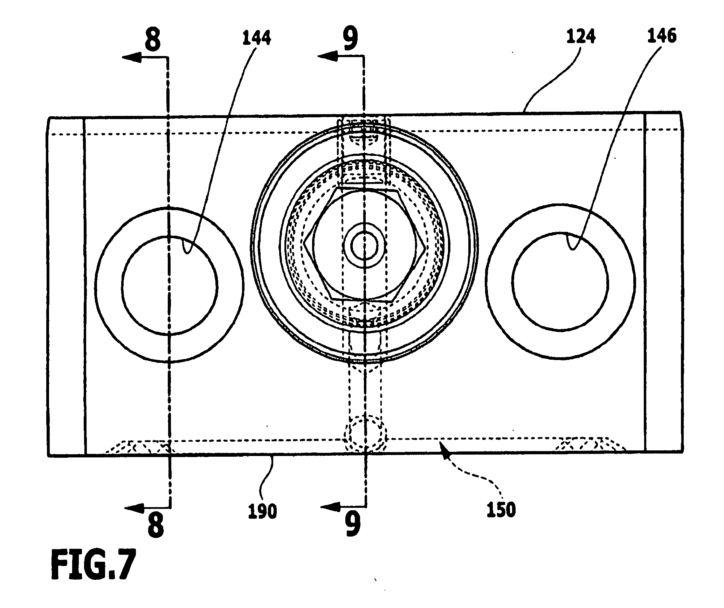

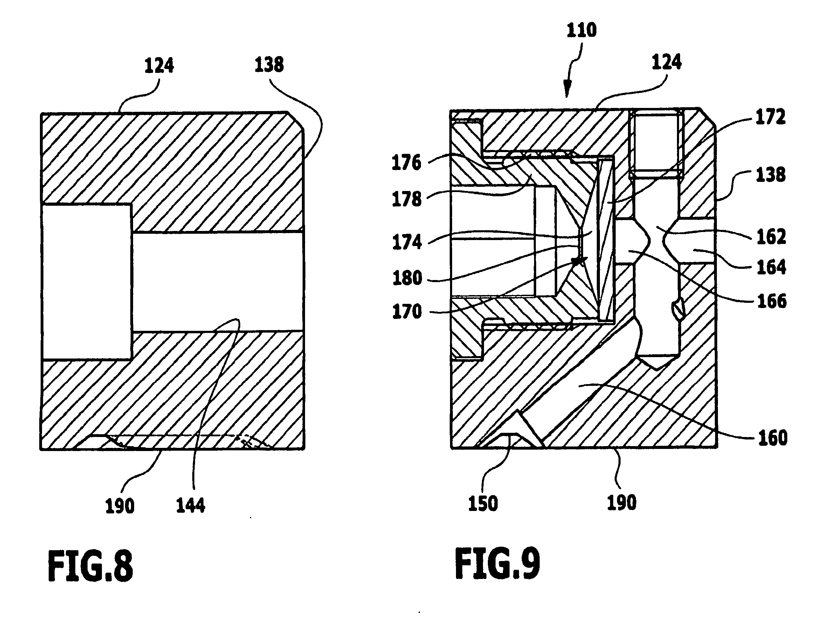

Wie exemplarisch am Beispiel des Gleitblocks 110 in den Fig. 6 bis 9 dargestellt, ist jeder Gleitblock 110 mit zwei Bohrungen 144, 146 für die Schrauben 140, 142 versehen, welche die Anlageseite 138 durchsetzen.

Darüber hinaus ist, wie in Fig. 6 bis 9 dargestellt, die Gleitstützfläche 114 des jeweiligen Gleitblocks 110 mit einem Verteilkanal 150 für Schmiermittel versehen, welcher zur Gleitstützfläche 114 hin offen ist und in dem Gleitblock 110 mit einem langgestreckten mittleren Abschnitt 152 sowie endseitig gegenüber dem mittleren Abschnitt 152 abgewinkelten Abschnitten 154 und 156 verläuft.

Gespeist wird der Verteilkanal 150 durch einen sich von diesem ausgehend in den Verteilblock 110 hineinerstreckenden Zufuhrkanal 160, welcher bis zu einer Verzweigung 162 verläuft, an welcher einerseits ein die Anlageseite 138 durchsetzender und durch den jeweiligen Stützflügel 94, 96, 98, 100 geführter Versorgungskanal 164 einmündet und andererseits ein Stichkanal 166, welcher zu einer als Ganzes mit 170 bezeichneten und in dem Gleitblock 110 angeordneten Druckspeichereinheit führt, die eine Membran 172 umfasst, welche in einen Membranausdehnungsraum 174 hineinbewegbar ist, der seinerseits durch einen in eine Ausnehmung 176 des Gleitblocks 110 einschraubbaren Einsatz 178 gebildet ist, wobei der Membranausdehnungsraum 174 über einen Durchbruch 180 mit Umgebungsdruck beaufschlagt ist.

Wird nun Schmiermittel über den Versorgungskanal 164 mit einem Druck zugeführt, der größer als der Umgebungsdruck ist, so dehnt sich die Membran 172 in den Membranausdehnungsraum 174 aus, wobei sich die Membran 172 schließlich an Wänden des Membranausdehnungsraums anlegt, um die Ausdehnung der Membran 172 zu begrenzen.

Ein kurzzeitiger Druckabfall zwischen aufeinander folgenden Schmierimpulsen in dem über den Versorgungskanal 164 zugeführten Schmiermittel führt dazu, dass sich die Membran 172 aus dem Membranausdehnungsraum 174 herausbewegt und das durch die Ausdehnung derselben in dem Membranausdehnungsraum 174 gespeicherte Schmiermittel über den Stichkanal 166 dem Zufuhrkanal 160 zuführt, so dass sich bei kurzzeitigen Unterbrechungen der Schmiermittelzufuhr in den Versorgungskanal 174 die Schmiermittelzufuhr zu dem Verteilkanal 150 im Wesentlichen aufrecht erhalten lässt.

Zur Verbesserung der Gleiteigenschaften der jeweiligen Gleitstützfläche 114 ist diese noch mit einer amorphen Kohlenstoffschicht 190 gemäß Richtlinie VDI 2418 versehen, welche hinsichtlich ihrer Eigenschaften diamantähnlich ist und ein im Wesentlichen verschleißfreies Gleiten der Gleitblöcke 110, 112 mit ihren Gleitstützflächen 114, 116 auf den Gleitführungsflächen 76, 78 erlaubt.

Ein Beispiel einer derartigen amorphen Kohlenstoffschicht ist die Schicht BALINIT® C, welche einen durch einen niedrigen Reibwert und gute Gleiteigenschaften vor allem gegen adhäsiven Verschleiß schützt und auch bei Mangelschmierung oder Trockenlauf hochbelastbar ist.

Insbesondere wird mit einer derartigen amorphen Kohlenstoffschicht eine Oberflächenermüdung und Tribooxidation weitgehend unterbunden.

Um nun zu erreichen, dass das erste Schlittenelement 70 und das zweite Schlittenelement 90 relativ zueinander spielfrei bewegbar sind, wirken die Gleitblöcke 110, 112 mit einer Vorspannkraft auf die Gleitführungsflächen 76, 78 der Führungselemente 72, 74.

Eine derartige Vorspannkraft, die in Richtung der Stützkraftrichtungen 132, 134 wirkt, wird dadurch erreicht, dass die jeweils auf einer Seite der Führungselemente 72, 74 angeordneten Gleitblöcke 110, 112, beispielsweise die Gleitblöcke 110, 112 der Stützflügel 94, 98 mit Übermaß, beispielsweise mit einem Übermaß bezüglich des Abstandes zwischen der Gleitstützfläche 114, 116 und der Abstützseite 124, 126 im Bereich von 2 bis 10 µm, hergestellt werden, und unter Aufweitung der jeweils paarweise einander gegenüberliegenden Stützflügel, beispielsweise der Stützflügel 94, 96 bzw. 98, 100 mittels einer Spanneinrichtung eingesetzt werden, so dass nach Lösen der Spanneinrichtung die Stützflügel 94, 96 bzw. 98, 100 aufgrund des Übermaßes der Gleitblöcke 110, 112, die in die Stützflügel 94 und 98 eingesetzt wurden, eine geringfügige bleibende Deformation aufweisen, die jedoch im Bereich der Materialelastizität liegt, so dass die Materialelastizität der Stützflügel 94, 96, bzw. 98, 100 letztlich für die Vorspannkraft verantwortlich ist, mit welcher insgesamt die einander gegenüberliegenden Gleitblöcke 110, 112 der Stützflügel 94, 96 bzw. 98, 100 mit der Vorspannkraft auf die Gleitführungsflächen 76, 78 wirken und damit eine spielfreie Führung des zweiten Schlittenelements 90 am ersten Schlittenelement 70 zur Folge haben.

Wie bereit erwähnt, kann bei dem dargestellten Ausführungsbeispiel der Werkzeugrevolver 50 unmittelbar auf dem zweiten Schlittenelement 90 sitzen oder, wie dargestellt, der Werkzeugrevolver 50 in Richtung eine Y-Achse relativ einen Schlittenelement 90 bewegbar sein, wobei hierzu eine Pinolenführung 200 vorgesehen ist, über welche der Werkzeugrevolver 50 relativ zum zweiten Schlittenelement 90 in Richtung der Y-Achse bewegbar geführt ist.

Zum Verschieben des Werkzeugrevolvers 50 in Richtung der Y-Achse ist hier ein Antriebsmotor 202 vorgesehen, welcher eine der Pinolenführung 200 zugeordnete Gewindespindel 204 antreibt, mit welcher eine Spindelmutter 206 in Richtung der Y-Achse verschiebbar ist, wobei die Spindelmutter 206 mit der verschiebbaren Pinole 208 der Pinolenführung 200 verbunden ist.

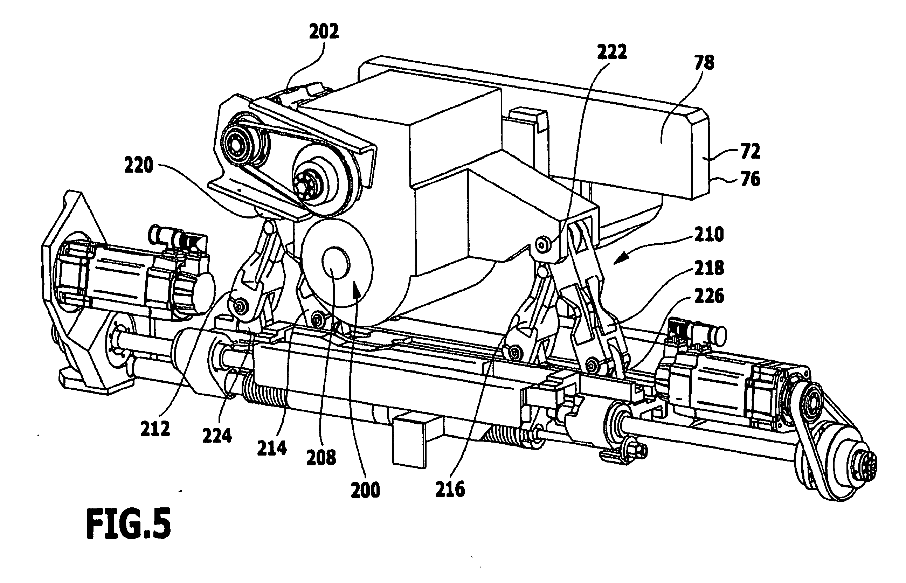

Ferner ist, wie in Fig. 5 dargestellt, eine Antriebsvorrichtung 210 vorgesehen, welche als sogenannte Stabkinematik ausgebildet ist und insbesondere eine Parallelführung für das zweite Schlittenelement 90 bildet, wobei beispielsweise vier längeninvariante Antriebsstreben 212, 214, 216 und 218 vorgesehen sind, die einerseits an zwei Gelenkeinheiten 220 und 222, welche an dem zweiten Schlittenelement 90 angeordnet sind, angreifen und andererseits wiederum mit zwei auf einer Längsführung parallel zur Z-Achse laufenden Führungsschlitten 224 und 226 gekoppelt sind, die relativ zueinander verschiebbar sind.

Dabei sind beispielsweise die Antriebsstreben 212 und 216 gelenkig mit dem Führungsschlitten 224 verbunden, während die Antriebsstreben 214 und 218 gelenkig mit dem Führungsschlitten 226 verbunden sind, so dass durch Relativverschiebung der Führungsschlitten 224, 226 eine Bewegung des zweiten Schlittenelements 90 in X-Richtung erfolgt und durch Verschiebung der beiden Führungsschlitten 224 und 226 in Richtung der Z-Achse eine Bewegung des zweiten Schlittenelements 90 in dieser Z-Richtung möglich ist.

Eine derartige Antriebsvorrichtung 210 ist beispielsweise im Detail in der deutschen Patentanmeldung 10 2005 041 496 A1 beschrieben.

## Patentansprüche

1. Werkzeugmaschine zum Bearbeiten eines Werkstücks (30) durch eine Relativbewegung zwischen dem Werkstück (30) und mindestens einem Werkzeug (60), umfassend ein Maschinengestell (10), einen am Maschinengestell (10) angeordneten Träger (22) mit einer ersten Aufnahme (28) für das Werkstück (30) oder das Werkzeug (60), ein am Maschinengestell (10) angeordnetes Kreuzschlittensystem (44, 46) mit einer zweiten Aufnahme (58) für das Werkzeug (60) bzw. das Werkstück (30), welche durch das Kreuzschlittensystem (44, 46) relativ zur ersten Aufnahme (28) in Richtung zweier, quer zueinander verlaufender Kreuzschlittenbewegungsachsen (X, Z) in einem Bewegungsbereich einer Kreuzschlittenbewegungsfläche bewegbar ist, wobei das Kreuzschlittensystem (44, 46) ein erstes und ein zweites Schlittenelement (70, 90) umfasst, die aneinander durch eine einzige in Richtung beider Kreuzschlittenbewegungsachsen (X, Z) bewegbare zweidimensionale Führung bewegbar geführt sind, wobei das erste Schlittenelement (70) am Maschinengestell (10) abgestützt ist und mindestens ein Führungselement (72, 74) mit in Richtung quer zur Kreuzschlittenbewegungsfläche auf gegenüberliegenden Seiten angeordneten Gleitführungsflächen (76, 78) aufweist, und wobei das zweite Schlittenelement (90) einen Basiskörper (92) und sich von diesem ausgehend erstreckende Stützflügel (94, 96) aufweist und mit Gleitstützflächen (114, 116) auf den Gleitführungsflächen (76, 78) abgestützt geführt ist und die zweite Aufnahme (58) trägt, und eine Antriebsvorrichtung (210), mit welcher das zweite Schlittenelement (90) relativ zum ersten Schlittenelement (70) in den beiden Kreuzschlittenbewegungsrichtungen (X, Z) mit definierter Ausrichtung der Schlittenelemente (70, 90) zueinander bewegbar und festlegbar ist,
**dadurch gekennzeichnet, dass** die Stützflügel (94,96) formschlüssige Aufnahmen (120) für die Gleitstützflächen (114, 116) tragenden Gleitblöcke (110, 112) aufweisen, und dass der Basiskörper (92) und die Stützflügel (94, 96) alle Gleitstützflächen (114, 116) unter Vorspannung gegenüber den Gleitführungsflächen (76, 78) halten.

2. Werkzeugmaschine nach Anspruch 1, **dadurch gekennzeichnet, dass** die Gleitblöcke (110, 112) durch die Aufnahmen (120) in den Stützflügeln (94, 96) auf ihren den Gleitstützflächen (114, 116) abgewandten Abstützseiten (124, 126) in Richtung der Gleitführungsflächen (76, 78) beaufschlagt sind.

3. Werkzeugmaschine nach Anspruch 1 oder 2, **dadurch gekennzeichnet, dass** in den Aufnahmen (120) für die Gleitblöcke (110, 112) jeder der Gleitblöcke (110, 112) mit der Abstützseite (124, 126) an einer Stützfläche (130) und mit einer Anlageseite (138) an einer Anlagefläche (136) anliegt.

4. Werkzeugmaschine nach einem der voranstehenden Ansprüche, **dadurch gekennzeichnet, dass** die Vorspannung durch eine Deformation im Bereich der Stützflügel (94, 96) erzeugbar ist.

5. Werkzeugmaschine nach Anspruch 4, **dadurch gekennzeichnet, dass** die Vorspannung durch die Materialelastizität der Stützflügel (94, 96) bedingt ist.

6. Werkzeugmaschine nach einem der voranstehenden Ansprüche, **dadurch gekennzeichnet, dass** die Stützflügel (94, 96) und der Basiskörper (92) ein einstückiges Teil bilden.

7. Werkzeugmaschine nach einem der voranstehenden Ansprüche, **dadurch gekennzeichnet, dass** die Gleitblöcke (110, 112) mit einem definierten Übermaß quer zur Kreuzschlittenbewegungsfläche hergestellt sind.

8. Werkzeugmaschine nach einem der voranstehenden Ansprüche, **dadurch gekennzeichnet, dass** sich die Gleitführungsflächen (76, 78) auf mehreren Seiten des Basiskörpers (92) erstrecken und dass sich insbesondere die Gleitführungsflächen (76, 78) auf gegenüberliegenden Seiten des Basiskörpers (92) erstrecken.

9. Werkzeugmaschine nach einem der voranstehenden Ansprüche, **dadurch gekennzeichnet, dass** das erste Schlittenelement (70) zwei Führungselemente (72, 74) umfasst.

10. Werkzeugmaschine nach Anspruch 9, **dadurch gekennzeichnet, dass** die zwei Führungselemente (72, 74) unabhängig voneinander am Maschinengestell (10) angeordnet sind.

11. Werkzeugmaschine nach Anspruch 10, **dadurch gekennzeichnet, dass** mindestens eines der Führungselemente (72, 74) lösbar am Maschinengestell (10) montierbar ist.

12. Werkzeugmaschine nach Anspruch 11, **dadurch gekennzeichnet, dass** das Maschinengestell (10) Aufnahmen (84, 86) für die Führungselemente (72, 74) aufweist.

13. Werkzeugmaschine nach einem der voranstehenden Ansprüche, **dadurch gekennzeichnet, dass** das zweite Schlittenelement (90) mit mindestens drei Gleitblöcken (110, 112) auf jeder Seite des mindestens einen Führungselements (72, 74) geführt ist.

14. Werkzeugmaschine nach einem der voranstehenden Ansprüche, **dadurch gekennzeichnet, dass** die Gleitblöcke (110, 112) paarweise an dem zweiten Schlittenelement (90) angeordnet sind und dass jeder Gleitblock (110, 112) eines Paares auf einer der einander gegenüberliegenden Gleitführungsflächen (76, 78) mit seiner Gleitstützfläche (114, 116) aufliegt.

15. Werkzeugmaschine nach einem der voranstehenden Ansprüche, **dadurch gekennzeichnet, dass** bei jedem der Gleitblöcke (110, 112) die Gleitstützfläche (114, 116) mit einer amorphen Kohlenstoffschicht (190) versehen ist.

## Claims

1. Machine tool for the machining of a workpiece (30) as a result of a relative movement between the workpiece (30) and at least one tool (60), comprising a machine frame (10), a carrier (22) arranged on the machine frame (10) and having a first receptacle (28) for the workpiece (30) or the tool (60), a compound slide system (44, 46) arranged on the machine frame (10) and having a second receptacle (58) for the tool (60) or the workpiece (30), said second receptacle being movable by the compound slide system (44, 46) relative to the first receptacle (28) in the direction of two axes of movement (X, Z) of the compound slide extending transversely to one another in an area of movement of a movement surface of the compound slide, wherein the compound slide system (44, 46) comprises a first and a second slide element (70, 90) guided on one another so as to be movable by a single two-dimensional guide movable in the direction of both axes of movement (X, Z) of the compound slide, wherein the first slide element (70) is supported on the machine frame (10) and has at least one guiding element (72, 74) with sliding guide surfaces (76, 78) arranged on oppositely located sides in the direction transverse to the movement surface of the compound slide, and wherein the second slide element (90) has a base member (92) and support wings (94, 96) extending from it and is guided in a supported manner on the sliding guide surfaces (76, 78) with sliding support surfaces (114, 116) and bears the second receptacle (58), and a drive device (210), the second slide element (90) being movable and securable with said drive device relative to the first slide element (70) in the two directions of movement (X, Z) of the compound slide with a defined alignment of the slide elements (70, 90) relative to one another,
**characterized in that** the support wings (94, 96) have form locking receptacles (120) for sliding blocks (110, 112) bearing the sliding support surfaces (114, 116), and that the base member (92) and the support wings (94, 96) keep all the sliding support surfaces (114, 116) pretensioned in relation to the sliding guide surfaces (76, 78).

2. Machine tool as defined in claim 1, **characterized in that** the sliding blocks (110, 112) are acted upon on their supporting sides (124, 126) facing away from the sliding support surfaces (114, 116) in the direction of the sliding guide surfaces (76, 78) by the receptacles (120) in the support wings (94, 96).

3. Machine tool as defined in claim 1 or 2, **characterized in that** in the receptacles (120) for the sliding blocks (110, 112) each of the sliding blocks (110, 112) abuts with the supporting side (124, 126) on a supporting surface (130) and with a contact side (138) on a contact surface (136).

4. Machine tool as defined in any one of the preceding claims, **characterized in that** the pretensioning is adapted to be generated by a deformation in the region of the support wings (94, 96).

5. Machine tool as defined in claim 4, **characterized in that** the pretensioning is caused by the material elasticity of the support wings (94, 96).

6. Machine tool as defined in any one of the preceding claims, **characterized in that** the support wings (94, 96) and the base member (92) form a single part.

7. Machine tool as defined in any one of the preceding claims, **characterized in that** the sliding blocks (110, 112) are produced with a defined oversize transverse to the movement surface of the compound slide.

8. Machine tool as defined in any one of the preceding claims, **characterized in that** the sliding guide surfaces (76, 78) extend on several sides of the base member (92) and that the sliding guide surfaces (76, 78) extend, in particular, on oppositely located sides of the base member (92).

9. Machine tool as defined in any one of the preceding claims, **characterized in that** the first slide element (70) comprises two guiding elements (72, 74).

10. Machine tool as defined in claim 9, **characterized in that** the two guiding elements (72, 74) are arranged on the machine frame (10) independently of one another.

11. Machine tool as defined in claim 10, **characterized in that** at least one of the guiding elements (72, 74) is adapted to be releasably mounted on the machine frame (10).

12. Machine tool as defined in claim 11, **characterized in that** the machine frame (10) has receptacles (84, 86) for the guiding elements (82, 84).

13. Machine tool as defined in any one of the preceding claims, **characterized in that** the second slide element (90) is guided with at least three sliding blocks (110, 112) on each side of the at least one guiding element (72, 74).

14. Machine tool as defined in any one of the preceding claims, **characterized in that** the sliding blocks (110, 112) are arranged on the second slide element (90) in pairs and that each sliding block (110, 112) of a pair rests on one of the sliding guide surfaces (76, 78) located opposite one another with its sliding support surface (114, 116).

15. Machine tool as defined in any one of the preceding claims, **characterized in that** the sliding support surface (114, 116) of each of the sliding blocks (110, 112) is provided with an amorphous carbon layer (190).

## Revendications

1. Machine-outil pour l'usinage d'une pièce (30) par déplacement relatif entre la pièce (30) et au moins un outil (60), comprenant un bâti de machine (10), un support (22) disposé sur le bâti de machine (10) avec une première réception (28) pour la pièce (30) ou l'outil (60), un système de coulisses à mouvements croisés (44, 46) disposé sur le bâti de machine (10) avec une deuxième réception (58) pour l'outil (60) ou la pièce (30), laquelle est déplaçable relativement à la première réception (28) par le système de coulisses à mouvements croisés (44, 46), dans la direction de deux axes de déplacement (X, Z) des coulisses à mouvements croisés s'étendant perpendiculairement l'un à l'autre dans une zone de déplacement d'une surface de déplacement des coulisses à mouvements croisés, le système de coulisses à mouvements croisés (44, 46) comprenant un premier et un deuxième élément de coulisse (70, 90) coulissés l'un contre l'autre par un seul guidage bidimensionnel mobile dans la direction des deux axes de déplacement (X, Z) des coulisses à mouvements croisés, le premier élément de coulisse (70) s'appuyant contre le bâti de machine (10) et comportant au moins un élément de guidage (72, 74) avec des surfaces de guidage de glissement (76, 78) disposées sur des côtés opposés dans la direction perpendiculaire à la surface de déplacement des coulisses à mouvements croisés, le deuxième élément de coulisse (90) comportant un corps de base (92) et des ailes d'appui (94, 96) s'étendant à partir de celui-ci, étant guidé avec des surfaces de contact de coulissement (114, 116) en appui sur les surfaces de coulissement (76, 78) et supportant la deuxième réception (58), et un dispositif d'entraînement (210), au moyen duquel le deuxième élément de coulisse (90) est déplaçable et fixable relativement au premier élément de coulisse (70) dans les deux directions de déplacement des coulisses à mouvements croisés (X, Z) avec un alignement défini des éléments de coulisse (70, 90) l'un par rapport à l'autre,
**caractérisée en ce que** les ailes d'appui (94, 96) comportent des réceptions (120) à complémentarité de forme pour des blocs coulissants (110, 112) supportant les surfaces de contact de coulissement (114, 116), et **en ce que** le corps de base (92) et les ailes d'appui (94, 96) maintiennent sous pré-contrainte toutes les surfaces de contact de coulissement (114, 116) par rapport aux surfaces de guidage de coulissement (76, 78).

2. Machine-outil selon la revendication 1, **caractérisée en ce que** les blocs coulissants (110, 112) sont sollicités par les réceptions (120) dans les ailes d'appui (94, 96), sur leurs côtés d'appui (124, 126) distants des surfaces de contact (114, 116) dans la direction des surfaces de guidage de coulissement (76, 78).

3. Machine-outil selon la revendication 1 ou la revendication 2, **caractérisée en ce que** dans les réceptions (120) pour les blocs coulissants (110, 112), chaque bloc coulissant (110, 112) repose contre une surface d'appui (130) par le côté d'appui (124, 126), et contre une surface de butée (136) par un côté de butée (138).

4. Machine-outil selon l'une des revendications précédentes, **caractérisée en ce que** la pré-contrainte peut être produite par une déformation au niveau des ailes d'appui (94, 96).

5. Machine-outil selon la revendication 4, **caractérisée en ce que** la pré-contrainte est due à l'élasticité du matériau des ailes d'appui (94, 96).

6. Machine-outil selon l'une des revendications précédentes, **caractérisée en ce que** les ailes d'appui (94, 96) et le corps de base (92) forment une pièce d'un seul tenant.

7. Machine-outil selon l'une des revendications précédentes, **caractérisée en ce que** les blocs coulissants (110, 112) sont fabriqués avec une surépaisseur définie perpendiculairement à la surface de déplacement des coulisses à mouvements croisés.

8. Machine-outil selon l'une des revendications précédentes, **caractérisée en ce que** les surfaces de coulissement (76, 78) s'étendent sur plusieurs côtés du corps de base (92) et **en ce que** les surfaces de guidage de coulissement (76, 78) s'étendent en particulier sur des côtés opposés du corps de base (92).

9. Machine-outil selon l'une des revendications précédentes, **caractérisée en ce que** le premier élément de coulisse (70) comprend deux éléments de guidage (72, 74).

10. Machine-outil selon la revendication 9, **caractérisée en ce que** les deux éléments de guidage (72, 74) sont disposés indépendamment l'un de l'autre sur le bâti de machine (10).

11. Machine-outil selon la revendication 10, **caractérisée en ce qu'**au moins un des éléments de guidage (72, 74) peut être monté de manière amovible sur le bâti de machine (10).

12. Machine-outil selon la revendication 11, **caractérisée en ce que** le bâti de machine (10) comporte des réceptions (84, 86) pour les éléments de guidage (72, 74).

13. Machine-outil selon l'une des revendications précédentes, **caractérisée en ce que** le deuxième élément de coulisse (90) est guidé par au moins trois blocs coulissants (110, 112) sur chaque côté de l'élément, ou des éléments de guidage (72, 74).

14. Machine-outil selon l'une des revendications précédentes, **caractérisée en ce que** les blocs coulissants (110, 112) sont disposés par paires sur le deuxième élément de coulisse (90), et **en ce que** chaque bloc coulissant (110, 112) d'une paire repose par sa surface de contact de coulissement (114, 116) sur une des surfaces de guidage de coulissement (76, 78) opposées l'une à l'autre.

15. Machine-outil selon l'une des revendications précédentes, **caractérisée en ce que** pour chacun des blocs coulissants (110, 112), la surface de contact de coulissement (114, 116) est pourvue d'une couche de carbone (190) amorphe.
